# EUROPÄISCHE PATENTSCHRIFT

(11) **EP 1 884 811 B1**
(45) Veröffentlichungstag und Bekanntmachung des Hinweises auf die Patenterteilung: **25.04.2012**
(21) Anmeldenummer: 07014550.3
(22) Anmeldetag: 25.07.2007
(51) Int. Cl.: G02B 6/44

(54) **Rohr mit Sensor**
Tube with sensor
Tuyau à capteur

(30) Priorität: 05.08.2006 DE 102006036719; 05.08.2006 DE 102006036720; 05.08.2006 DE 102006036721
(43) Veröffentlichungstag der Anmeldung: 06.02.2008
(73) Patentinhaber: egeplast Werner Strumann GmbH & Co. KG, 48268 Greven (DE)
(72) Erfinder: Kunik, Peter, Dr., 64753 Brombachtal (DE)
(74) Vertreter: Fritz & Brandenburg Patentanwälte

(56) Entgegenhaltungen:
- EP-A1- 0 525 594
- DE-A1- 2 550 940
- DE-A1- 4 301 035
- DE-A1- 10 044 039
- DE-A1-102004 051 594
- DE-U1-202004 017 158
- US-A- 5 006 806
- US-A- 5 415 203
- US-A- 6 049 279

## Beschreibung

Die vorliegende Erfindung betrifft ein Kabelschutzrohr, welches mindestens einen Sensor und Informationsträger aufweist, der geeignet ist, eine für eine Eigenschaft oder Funktion des Rohrs relevante Messgröße zu erfassen, wobei der mindestens eine Sensor und Informationsträger durch ein kunststofftechnisches Formgebungsverfahren bei der Herstellung des Rohrs in die Rohrwandung des Rohrs integriert ist und wobei der Sensor und Informationsträger wenigstens einen Chip umfasst oder in Form wenigstens eines Chips vorliegt.

Aus der DT 25 50 940 A1 ist ein Verfahren zum Feststellen von Feuchtigkeitsorten in Wärme dämmender Isolierung von Rohrleitungen bekannt, bei dem zwei verdrillte Kupferleitungen und eine Messstelle mit elektrisch leitenden Platten in die Wärme dämmende Isolierung einer Rohrleitung eingebettet werden. Bei auftretender Feuchtigkeit nimmt die Leitfähigkeit zwischen den elektrisch leitenden Platten zu und die entsprechende Messstelle kann geortet werden. Das Verfahren kommt bei Fernheizungsrohren oder Pipelines zum Einsatz. Die Messstelle befindet sich nicht in der Rohrwandung des überwachten Rohrs, sondern in der dieses umgebenden Isolierung.

Die DE 43 01 035 A1 beschreibt eine Vorrichtung zur Detektion von Leckagen in einem ein Medium führenden Leitungsrohr, bei der Sensorleiter in den Zwischenraum zwischen einem das Medium führenden Innenrohr und einem dieses konzentrisch umgebenden Außenrohr eingebettet sind. Diese Sensorleiter sind also nicht in die Rohrwandung selbst integriert.

Die DE 299 09 907 U1 beschreibt eine Leckageüberwachungseinrichtung für Doppelwandrohre. Es wird zunächst ein Innenrohr aus Kunststoff extrudiert, auf dieses wird danach ein Wellschlauch gelegt, auf den wiederum ein ein Außenrohr bildendes Kunststoffband gewickelt wird. Mit einem Leckagesensor wird geprüft, ob eine Flüssigkeit oder ein Gas in die zwischen dem Wellschlauch und den beiden Rohren gebildeten Zwischenräume gelangt.

In der EP 0 525 594 A1 ist ein Verfahren beschrieben, bei dem neben einer zu überwachenden Rohrleitung zusätzlich ein Sensorschlauch verlegt wird. Dem in der Rohrleitung strömenden Medium wird eine Tracersubstanz zugefügt, die dann von einem am Sensorschlauch befindlichen Detektor detektiert wird.

Die DE 100 44 039 A1 beschreibt ein flexibles Leitungsrohr bestehend aus einem inneren Kunststoffrohr, auf dem eine Lage aus einer Aluminiumfolie aufliegt, über der eine weitere Kunststoffschicht liegt. Die Aluminiumfolie wird mit den beiden Rohren verklebt oder verschweißt. Auf dieses Sandwichrohr werden dann Bänder aus einem bei Feuchtigkeitszutritt quellenden Vliesmaterial gewickelt, auf die dann Adern aus Kupferdraht gelegt werden. Darüber wird eine Permeationssperrschicht aus einer diffusionsdichten Kunststofffolie gewickelt, auf die dann wiederum ein Außenrohr aufextrudiert wird. Die Herstellung dieses bekannten Leitungsrohrs ist sehr aufwändig und kostenintensiv, da sie viele Arbeitsschritte und einen hohen Materialaufwand umfasst.

Die DE 101 44 552 A1 beschreibt Bauteile der Antriebstechnik und des Kabelbaus wie Hydraulikschläuche, Kabel und Dichtungen, die aus gummi- oder kunststoffähnlichen Werkstoffen bestehen und bei denen an der Wandung oder auch in der Wandung ein Transponder, Sensor oder Datenlogger angeordnet ist. Nach den Ausführungsbeispielen dieser Anmeldung kann zum Beispiel in einer Hohlkammer einer Dichtung ein Sensor eingebaut werden, der eingeklebt oder mit silikonähnlichen Materialien fixiert wird. Hier handelt es sich um Methoden der Anbringung des Sensors, die nicht unmittelbar bei der Herstellung einer solchen Dichtung sondern nachträglich vorgenommen werden. Dies gilt auch für die lediglich erwähnte Methode des Einvulkanisierens. Beim Vulkanisieren handelt es sich um ein Verfahren, bei dem Kautschuk mit Hilfe von Schwefel und anderen Zusatzstoffen unter Erhitzen in Gummi verwandelt wird. Durch Ausbildung von Sulfidbrücken werden dabei die Polymerketten vernetzt.

Alternativ wird in der DE 101 44 552 A1 auch vorgeschlagen, elektronische Bauteile in vorgefertigten Taschen anzubringen oder eine Kupferlitze als Antenne in einen Schlitz eines Dichtungskörpers einzulegen. Es ist auch davon die Rede, Transponder oder Sensoren in einer Kabelummantelung anzuordnen. Es wird jedoch nicht näher ausgeführt, aus welchem Material die Kabelummantelung besteht und wie die elektronischen Bauteile in diese Kabelummantelung eingebracht werden.

Die DE 20 2004 017 158 U1 beschreibt rohrförmige Elemente für den Kanalbau, mit elektronischen Bauteilen für deren Überwachung. Die elektronischen Bauteile können in beim Zusammenbau zweier Kanalbauelemente verwendeten Dichtungen, Einsteckteilen oder Muffen angeordnet werden. Dazu werden Hohlräume oder Bohrungen vorgesehen, in die die elektronischen Bauteile eingeklebt werden. Die elektronischen Bauteile können auch auf die Rohrwandung außen oder innen aufgeklebt werden, müssen dann aber durch ein Abdeckmittel geschützt werden, um den Kontakt mit dem das Rohr durchströmenden Medium zu vermeiden.

Aus der DE 42 37 477 C2 ist ein rohrförmiges Bauteil mit einer Lecküberwachungseinrichtung bekannt. Das rohrförmige Bauteil dient zur Förderung elektrisch leitfähiger chemisch aggressiver Flüssigkeiten. Die flüssigkeitsdichte Innenschicht ist aus thermoplastischem Kunststoff, eine Außenschicht aus faserverstärktem Kunststoff. Dazwischen wird eine Fühlerader wendelförmig um die rohrförmige Innenschicht herum angeordnet, die aus einer Chrom-Nickel-Legierung mit hohem elektrischen Widerstand besteht. Wenn es zu einer Beschädigung der Innenschicht kommt, durch die Flüssigkeit austritt, dient die Fühlerader zusammen mit einer Rückführader aus Kupfer als Sensor. Über ein Messgerät erfolgt die Anzeige einer Leckage, wobei diese auch geortet werden kann.

In der EP 0 449 795 A1 ist ein Kabelschutzrohr mit einem Detektionsdraht beschrieben. Zur nachträglichen Einbringung des Detektionsdrahts in die Rohrwandung des bereits geformten Rohrs ist jedoch ein aufwändiges Verfahren notwendig. Dazu wird zunächst mit einem Werkzeug eine Nut in die Aussenwandung des Rohrs geschnitten, dann der Draht eingelegt und danach in einem weiteren Arbeitsgang in erweichtes Füllmaterial in die Nut eingebracht, um diese zu verschließen und den Draht abzudecken. Neben der aufwändigen Herstellung ist hier nachteilig, dass ein solches nachträglich verändertes Rohr oft den Normen nicht mehr entspricht.

In der DE 690 14 521 T2 werden Kabelschutzrohre für Lichtleitkabel beschrieben, bei denen Permanentmagneten in verschiedenen Anordnungen in die Wandung des Rohrs eingebettet werden. Mittels einer Magnetfeld-Messeinrichtung können dann oberirdisch die Rohre geortet werden. Es kann hier jedoch im wesentlichen nur jeweils die Lage der Magneten festgestellt und somit beispielsweise der Verlauf eines in dem Rohr verlegten Lichtleitkabels oberirdisch festgestellt werden. Allenfalls ist es noch möglich über eine bestimmte Anordnung mehrerer Magneten eine gewisse Codierung vorzunehmen, die einem bestimmten Rohrtyp zugewiesen ist. Es ist jedoch nicht möglich eine größere Datenmenge von unterschiedlichen Informationen oder komplexere Informationen betreffend Rohr oder Kabel zu speichern.

Das US-Patent 5,415,203 beschreibt Rohre der eingangs genannten Gattung aus Gummi oder Kunststoff, die in axialer Richtung gesehen sich abwechselnde opake und transparente Abschnitte umfassen. In oder auf der Rohrwandung der transparenten Abschnitte werden temperaturempfindliche Chips angeordnet, die ihre Farbe ändern, wenn sich die Innentemperatur des Rohrs ändert. Diese Rohre werden zum Beispiel für den Transport flüssiger Medien eingesetzt und die temperaturempfindlichen Chips haben eine Sicherheitsfunktion, da sie eine Überhitzung des in dem Rohr transportierten Mediums anzeigen können. Da die Anzeige einer solchen Überhitzung durch den Farbwechsel des Chips erfolgt, der optisch wahrgenommen werden muss, kommt diese Lösung nicht für die Überwachung von im Erdreich verlegten Rohren in Betracht. Außerdem ist diese Lösung nur sehr eingeschränkt einsetzbar, da sie auf teilweise transparente Rohre beschränkt ist. Es müssen zudem Rohre aus in axialer Richtung sich abwechselnden Abschnitten (opak und transparent) hergestellt werden, wodurch der Herstellungsprozess aufwändiger wird. Bei der Extrusion müssen unter anderem verschiedene Granulate jeweils abwechselnd einer Extrusionsvorrichtung zugeführt werden.

Bei den in dieser US-Patentschrift beschriebenen Chips handelt es sich zudem weder um Mikrochips, also elektronische Bauteile, noch um aktive Sensoren im eigentlichen Sinne der vorliegenden Erfindung. Vielmehr sind dies Farbindikatoren, also Additive, die dem Kunststoff zugegeben werden und auf eine Änderung der Temperatur (passiv) reagieren, indem sie Ihre Farbe ändern. Derartige Farbindikatoren verfügen weder über eine "künstliche" Intelligenz noch sind sie für andere Zwecke als für die reine Anzeige einer Temperaturänderung einsetzbar. Ebensowenig ist ein solches Farbindikator in der Lage, Werte betreffend eine festgestellte Änderung der Temperatur zu speichern.

Ausgehend von dem zuvor zitierten Stand der Technik besteht die Aufgabe der vorliegenden Erfindung darin, ein Kabelschutzrohr der eingangs genannten Gattung zur Verfügung zu stellen, bei dem die Sensorik vielseitiger anwendbar ist bzw. eine Vielzahl unterschiedlicher auch komplexer Informationen betreffend das Rohr oder ein in dem Rohr verlegtes Kabel in einfacher Weise gespeichert werden können.

Die Lösung dieser Aufgabe liefert ein Kabelschutzrohr mit den Merkmalen des Anspruchs 1.

Ziel der erfindungsgemäßen Lösung ist es weiterhin, dass die Funktion der Sensors und Informationsträgers nicht auf bestimmte Rohrtypen mit transparenten Abschnitten beschränkt ist und der Sensor und Informationsträger geeignet ist, andere für Kabelschutzrohre wichtige Eigenschaften oder Funktionen des Rohrs selbst oder von in dem Rohr verlegten Kabeln oder Leitungen auch nach Erdverlegung des Rohrs zu überwachen und abzuspeichern.

Ein wichtiger Aspekt der erfindungsgemäßen Lösung besteht darin, dass der Sensor und Informationsträger quasi ein vollständig integrierter Bestandteil des Rohrs sind und in der Regel nicht von diesem getrennt oder entfernt werden können. Der Sensor oder die Sensoren befinden sich anders als bei den meisten bekannten Lösungen in der Rohrwandung und sind bedingt durch das Herstellungsverfahren dort so eingebettet, dass sich das Rohr rein äußerlich nicht von einem Rohr ohne Sensor/Informationsträger unterscheidet. Durch den Sensor werden die bestimmungsgemäßen Eigenschaften und Kennwerte des Rohrs nicht beeinflusst oder verändert, so dass beispielsweise anders als im Stand der Technik keine Einschränkungen in Bezug auf die das Rohr durchströmenden Medien gegeben sind und auch keine Maßnahmen zum Schutz des Sensors getroffen werden müssen. Auch die mechanischen Eigenschaften des Rohrs bleiben erhalten, beispielsweise Ovalität, Zugfestigkeit, zulässige Zugkraft einschließlich Zugkraftgrenze etc. Rohre der erfindungsgemäßen Art können also beispielsweise die Zulassungskriterien für Druckrohre erfüllen und auch sonst nach den Zulassungskriterien für entsprechende Rohre dieser Art mit spezifischen Eigenschaften beurteilt werden, was in der Praxis erhebliche Vorteile hat. Die erfindungsgemäße Lösung ist demnach allen bekannten Lösungen überlegen, bei denen ein veränderter Aufbau des Rohrs notwendig ist, um den Sensor an einem Rohr anzubringen.

Das erfindungsgemäße Rohr mit in die Wandung integriertem Sensor/Informationsträger oder Sensoren unterliegt hinsichtlich Anwendung und Einsatzart keinerlei Einschränkungen. Es eignet sich beispielsweise für schwierige Bodenarten oder Bodenklassen sowie die unterschiedlichsten Verlegemethoden wie z.B. Horizontal-Bohren oder grabenlose Verlegung oder Renovierungsmethoden wie z. B. Burst-Lining oder Relining.

Der Sensor oder die Sensoren können bei der Herstellung des Rohrs durch ein kunststofftechnisches Formgebungsverfahren in die Wandung des Rohrs eingebracht werden. Man kann dabei einzelne diskrete Sensoren verwenden oder Sensorketten oder Sensorbänder. Bei einer Sensorkette können mehrere Sensoren beispielsweise über ein Zugband als Abstandhalter miteinander verbunden sein. Bei einem Sensorband können die Sensoren in einem Band aus Kunststoff eingebettet sein.

Vorzugsweise wird der Sensor/Informationsträger oder werden die Sensoren/Informationsträger in den noch plastischen Kunststoff vor dessen Erkalten eingearbeitet. Besonders bevorzugt ist ein Herstellungsverfahren, bei dem das Rohr extrudiert wird und der Sensor oder die Sensoren dabei in die Rohrwandung einextrudiert werden. Wichtige Verfahren sind hierbei insbesondere und alternativ die Einbringung des Sensors, der Sensoren, der Sensorkette, des Sensorbands bei der Extrusion, die Coextrusion, die Parallelextrusion sowie die chemische oder physikalische Nachbehandlung nach der Extrusion, zum Beispiel Kreuzvernetzung von Polymerketten (quervemetztes Polyethylen). Wenn man ein Sensorband einextrudiert, welches beispielsweise aus einem gleichen oder ähnlichen Kunststoff besteht wie das hergestellte Rohr, ergibt sich der weitere Vorteil, dass der Kunststoff des Sensorbands in dem Kunststoff der Rohrwandung durch die erhöhte Temperatur verschmilzt und dadurch die Sensoren freisetzt, ohne dass die Eigenschaften des Rohrs beeinträchtigt werden.

Ein ganz wesentlicher Vorteil des erfindungsgemäßen Verfahrens besteht darin, dass es möglich ist, den Sensor/Informationsträger so in die Rohrwandung zu integrieren, dass dieser innenseitig radial nicht in den Rohrquerschnitt hineinragt und somit das vollständige freie Lumen des Rohrs erhalten bleibt. Vorzugsweise steht der Sensor/Informationsträger auch außenseitig am Rohr nicht radial vor, wodurch insbesondere Probleme bei der Verlegung, z. B. eine Beschädigung des Sensors vermieden werden. Aufgrund des erfindungsgemäßen Herstellungsverfahrens ist es aber auch nicht notwendig, Bohrungen oder Hohlräume für die Unterbringung des Sensors in der Rohrwandung vorzusehen oder nachträglich in diese einzubringen. Zum einen würde dies das Herstellungsverfahren aufwändiger gestalten und zum anderen bestünde dabei auch die Gefahr, dass die mechanischen Eigenschaften des Rohrs verändert würden, zum Beispiel durch eine Schwächung der Wandstärke im Bereich von Hohlräumen oder Bohrungen oder dergleichen.

Die erfindungsgemäße Lösung ermöglicht eine Herstellung von Endlosrohren in kontinuierlicher Fertigung, wodurch sich eine ganze Reihe von Vorteilen ergeben. Die Fertigung ist dadurch rationell und bei der Verlegung eines solchen Rohrs sind keine Verbindungselemente wie Muffen oder dergleichen notwendig und es entfallen Dichtungen in den Verbindungsbereichen. Das Verfahren ermöglicht die großtechnische Herstellung der erfindungsgemäßen Rohre mit Sensor. Eine Aufarbeitung oder Nacharbeitung nach dem Verlassen der Produktionslinie ist in der Regel nicht mehr notwendig. Rohre der erfindungsgemäßen Art können mit integrierten Sensoren uneingeschränkt Verbindungsmethoden wie zum Beispiel Stumpfschweißen, Spiegelschweißen, elektrisches Drahtwendelschweißen etc. unterzogen werden.

Bei Einbringung einer Mehrzahl von Sensoren/Informationsträgern in die Rohrwandung ist es bevorzugt vorgesehen, dass entweder die Sensoren jeweils mit Abstand zueinander entlang einer metrisch fixierten Kette parallel zur Längsachse des Rohrs in der Rohrwandung angeordnet sind oder aber eine Mehrzahl von Sensoren jeweils mit Abstand zueinander in einer metrisch fixierten Kette auf einer spiralförmigen Linie um die Längsachse des Rohrs in der Rohrwandung angeordnet sind. Die letztgenannte Alternative hat zum Beispiel den Vorteil, dass bei Kabelschutzrohren, in denen das Kabel verdrillt ist, eine bessere Erfassung der Sensoren mittels einer Überwachungseinrichtung wie zum Beispiel einer Antenne möglich ist.

Die erfindungsgemäßen Rohre können insbesondere im wesentlichen aus einem Polyolefin, Polyaromaten, Polyalkan, insbesondere einem Polyethylen, Polypropylen, Polycarbonat mit und ohne Heteroatom, oder einem Polyvinylchlorid bestehen und der Sensor bzw. die Sensoren sind in diesen Kunststoff eingebettet.

Erfindungsgemäß besonders bevorzugt ist die Anwendung bei Kabelschutzrohren, insbesondere für Kabel oder Leitungen mit Glasfasern, Kunststofffasern, mineralischen Polymerfasern oder Metallen als leitenden oder übertragenden Medien.

Weiterhin ist vorzugsweise mindestens einer der verwendeten Sensoren ein Halbleitersensor oder Gate-Array-Sensor.

Mindestens einer der erfindungsgemäßen Sensoren kann beispielsweise einen Mikrochip umfassen, geeignet zur Speicherung von Daten, die für die ordnungsgemäße Funktion des Rohrs oder die Funktion oder eine Eigenschaft des in dem Rohr verlegten Kabels oder der Leitung relevante Messgrößen betreffen.

Erfindungsgemäß kommen die unterschiedlichsten Sensoren für die Überwachung oder Überprüfung verschiedener Funktionen des Rohrs in Betracht.

Die Erfindung ist insbesondere bei Kabelschutzrohren für Glasfaserkabel anwendbar. Dies können beispielsweise Schutzrohre für Kabel oder Leitungen mit freien oder ummantelten Glasfasern, Glasfaserbündeln, mit einer mineralischen oder nichtmineralischen polymeren Schicht umhüllten Glasfasern oder dergleichen sein. Es ist zu Bedenken, dass Glasfaserkabel sehr empfindlich und teuer ist. Der Schutz und die Überwachung der Intaktheit solcher Kabel sind also besonders bedeutsam. In diesem Zusammenhang kommt den erfindungsgemäßen Sensoren besondere Bedeutung zu. Die Kabelschutzrohre können so überwacht werden, dass die Stelle, an der eine Funktionsstörung vorliegt exakt unterscheidend geortet werden kann, zum Beispiel über ein Satellitenüberwachungssystem. Dies kann so erfolgen, dass auch eine genaue Identifizierung eines eventuell beschädigten Glasfaserkabels möglich ist. Dies ist insbesondere deshalb wichtig, weil oft in solchen Kabelschutzrohren eine größere Anzahl von Kabeln oder Leitungen verlegt werden und nur bei genauer Identifizierung eines beschädigten Kabels ein gezielter Austausch eines erdverlegten Kabels möglich ist.

In manchen Fällen enthalten die Kabelschutzrohre Inertgas wie Stickstoff oder Xenon, um beispielsweise eine Funkenbildung zu unterbinden. Das Schutzgas kann unter Druck stehen. In diesen Fällen ist es gegebenenfalls sinnvoll, außerdem eine Leckage des Schutzrohrs über austretendes Gas zu detektieren.

Der Sensor kann zum Beispiel auch auf die Bildung von Kondensationswasser in einem Schutzrohr ansprechen oder die Restfeuchte in der Atmosphäre im Inneren des Schutzrohrs vor einer Kondensation messen.

Ein erfindungsgemäßes Kabelschutzrohr kann beispielsweise mindestens ein Mantelrohr umfassen, welches eine äußere Umhüllung für eine variable Anzahl von kleineren Innenröhrchen bildet, die das Mantelrohr aufnimmt. Die kleineren Inneröhrchen nehmen dann wiederum einzelne Kable oder Kabelgruppen auf, für die sie als Schutzrohr dienen. Das Mantelrohr kann einen polygonalen Umriss aufweisen oder auch einen runden Umriss. Die Innenröhrchen können in dem Mantelrohr lagefixiert sein, insbesondere bei der Variante mit polygonalem Umriss. Die Innenröhrchen können aber auch in dem Mantelrohr in axialer Richtung verschiebbar sein. Die Innenröhrchen können somit passend oder auch mit Spiel in dem Mantelrohr aufgenommen sein. Das Mantelrohr kann auch nur eine geringere als die maximal mögliche Anzahl von Innenröhrchen aufnehmen, so dass freier Platz für weitere Innenröhrchen verbleibt. Das Mantelrohr kann bei der ersten Variante mit lagefixiertem Innenröhrchen beispielsweise bei der Herstellung auf die Innenröhrchen aufgeschrumpft werden, wodurch sich die Lagefixierung ergibt.

Gegenstand der vorliegenden Erfindung ist weiterhin eine Einrichtung zur Überwachung oder Prüfung der ordnungsgemäßen Funktion oder mindestens einer Eigenschaft eines Rohrs gemäß einem der Ansprüche 1 bis 21 oder eines in dem Rohr verlegten Kabels oder einer Leitung, welche dadurch gekennzeichnet ist, dass diese eine Antenne umfasst, die einen Weg entlang des Rohrs abfährt, um in mindestens einem Sensor/Informationsträger gespeicherte Informationen abzufragen.

Gegenstand der vorliegenden Erfindung ist weiterhin ein Verfahren zur Überwachung oder Prüfung der ordnungsgemäßen Funktion oder mindestens einer Eigenschaft eines Kabelschutzrohrs gemäß einem der Ansprüche 1 bis 21 oder eines in dem Rohr verlegten Kabels oder einer Leitung, welches dadurch gekennzeichnet ist, dass in einer Mehrzahl in der Rohrwandung angeordneter Sensoren/Informationsträgern gespeicherte Informationen abgefragt werden und durch Vergleich der von den einzelnen Sensoren gelieferten Informationen eine Stelle des Rohrs oder des Kabels oder der Leitung, an der eine Fehlfunktion vorliegt, geortet wird.

Erfindungsgemäß können mittels mindestens eines Signals in mindestens einem in der Rohrwandung des insbesondere im Erdreich verlegten Rohrs angeordneten Sensor gespeicherte Informationen mittels einer Überwachungseinrichtung aus der Entfernung abfragbar sein. Dies kann zum Beispiel durch eine Antenne geschehen, mittels derer man ein Rohr abfährt, was auch kontinuierlich geschehen kann. Die Abfrage der im Sensor gespeicherten Information kann zum Beispiel mittels elektromagnetischer Wellen, der magnetischen Induktion, IR, NIR, Mikrowellen oder im Bereich der Radiowellen/Radiofrequenzen oder Ultraschall erfolgen. Vorteilhaft ist es, wenn in einer Mehrzahl in der Rohrwandung angeordneter Sensoren gespeicherte Informationen abgefragt werden und durch Vergleich der von den einzelnen Sensoren gelieferten Informationen eine Stelle des Rohrs oder Behälters, an der eine Fehlfunktion vorliegt, geortet wird. Beispielsweise kann man alle 10cm oder alle 20 cm bis alle 50 cm einen Sensor anordnen, auf einer geraden Linie oder einer spiralförmigen Linie um die Rohrachse, und aus den empfangenen Signalen Mittelwerte bilden, so dass sich die Störungsstelle durch Abweichung vom Mittelwert feststellen lässt.

Bei Verwendung elektromagnetischer Wellen für die Abfrage kommen grundsätzlich unterschiedlichste Frequenzen in Betracht, beispielsweise Radiofrequenzen, Mikrowellen etc. Die Ortung der Fehlstelle kann unter Zuhilfenahme eines Satellitenüberwachungssystems (GPS) erfolgen. Bei erdverlegten Rohren ist es aus Kostengründen sehr vorteilhaft, wenn eine Fehlfunktion sehr genau feststellbar ist und auch ein Eingriff zur Schadensbehebung mit optimal reduziertem Grabungsaufwand erfolgen kann. Es muss nur das Erdreich exakt dort aufgegraben werden, wo sich eine Störungsstelle befindet. Dies setzt bei einer Vielzahl verlegter Kabel und Leitungen auch deren genaue Identifizierung voraus, was durch das erfindungsgemäße Verfahren zur Überwachung oder Überprüfung von Rohren möglich ist.

Gemäß einer bevorzugten Weiterbildung der Erfindung ist mindestens ein Sensor vorgesehen, der geeignet ist, die Stärke eines in dem Kabel oder der Leitung geleiteten Signals oder die Amplitude einer in dem Kabel oder der Leitung geleiteten elektromagnetischen Welle zu erfassen. Weiterhin ist es beispielsweise vorteilhaft, wenn mindestens ein Sensor vorgesehen ist, der geeignet ist, die Funktion oder eine Eigenschaft mindestens eines im Übergangsbereich zwischen zwei miteinander verbundenen Kabel- oder Leitungsabschnitten angeordneten Verstärkers zu prüfen oder zu überwachen. Bei der Signalleitung insbesondere mit hoher Geschwindigkeit in Glasfaserkabeln tritt eine Abnahme der Signalstärke auf, wenn das Signal ein optisches Verbindungselement passiert. Deshalb ist es in der Regel notwendig, das Signal zu verstärken. Jedoch führt die Verwendung der Verstärker zur Erzielung größerer Distanzen bei der Signalübertragung zu nachteiligen Effekten, insbesondere zu der so genannten Dispersion, wodurch das Signal verbreitert wird, da sich verschiedene Wellenlängen mit unterschiedlichen Geschwindigkeiten ausbreiten. Die Erfindung schlägt vor, in die Rohrwand eines Kabelschutzrohrs einen geeigneten Sensor zu integrieren, der die ordnungsgemäße Signalübertragung in dem Kabel bzw. in der Leitung überwacht und Störungen der genannten Art detektiert und vorzugsweise genau ortet und/oder der die ordnungsgemäße Funktion der Verstärker überwacht, Fehlfunktionen feststellt und ortet und diesbezügliche Informationen vorzugsweise speichert, so dass sie von außen abrufbar sind.

Die in den Unteransprüchen genannten Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die Erfindung anhand von Ausführungsbeispielen unter Bezugnahme auf die beiliegenden Zeichnungen näher beschrieben. Dabei zeigen:
Figur 1 eine Seitenansicht eines Rohrs gemäß einer ersten Ausführungsvariante der vorliegenden Erfindung, wobei die Rohrwandung zur besseren Verdeutlichung der Anordnung der Sensoren teilweise aufgeschnitten dargestellt ist;
Figur 2 eine entsprechende Querschnittsdarstellung eines Rohrs gemäß der Variante von Figur 1;
Figur 3 eine Seitenansicht eines Rohrs gemäß einer alternativen Variante der vorliegenden Erfindung, wiederum teilweise aufgeschnitten zur Verdeutlichung der Lage der Sensoren;
Figur 4 eine entsprechende Querschnittsdarstellung eines Rohrs gemäß der Variante von Figur 3;
Figur 5 eine perspektivische Ansicht eines Kabelschutzrohrs gemäß einer Variante der Erfindung;
Figur 6 eine perspektivische Ansicht gemäß einer etwas anders ausgebildeten Variante der Erfindung.

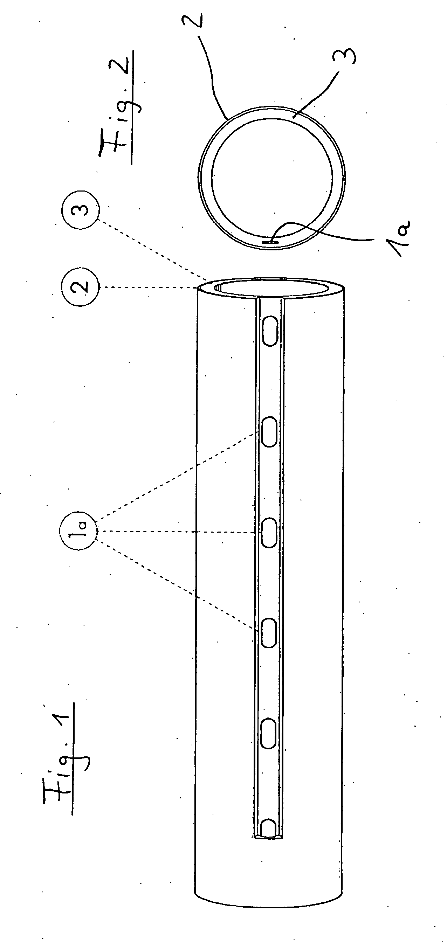

Zunächst wird auf die Figuren 1 und 2 Bezug genommen und anhand dieser eine erste Ausführungsvariante der vorliegenden Erfindung näher erläutert. Das erfindungsgemäße Rohr ist schematisch vereinfacht dargestellt. Es handelt sich beispielsweise um ein Rohr aus Kunststoff, dessen Wandung beispielsweise zweischichtig aufgebaut ist, mit einer inneren Schicht 3, die sich über den überwiegenden Teil der Materialstärke der Rohrwandung erstrecken kann. Beispielsweise besteht diese innere Schicht 3 aus einem Polyolefin. Weiterhin ist eine äußere Schicht 2 vorgesehen, die die innere Schicht konzentrisch umgibt. Die äußere Schicht 2 dient als Schutzschicht, gegen mechanische Einflüsse und andere Beanspruchungen und besteht vorzugsweise aus einem Material ausreichender Härte. Der Aufbau des Rohrs sei hier jedoch nur beispielhaft angeführt und ist für die vorliegende Erfindung, bei der es um die Sensoren geht, nicht von entscheidender Bedeutung.

Figur 1 zeigt, dass eine Anzahl von Sensoren 1 a in Längsrichtung jeweils mit Abstand zueinander in der Rohrwandung angeordnet sind. Die Anordnung der Sensoren verläuft also parallel zur Rohrachse, die Sensoren befinden sich in einer linearen Anordnung, so dass man von einer linearen Sensorkette sprechen kann. Die Rohrwandung ist dort wo die Sensoren 1 a angeordnet sind geschlossen, das heißt, die Sensoren sind vollständig in die Rohrwandung eingebettet. Nur aus zeichnerischen Gründen ist das Rohr im Bereich der Sensoren aufgeschnitten dargestellt, damit man die Lage der Sensoren erkennen kann. Das Rohr ist somit in seinen Dimensionen gegenüber einem herkömmlichen Rohr gleicher Bauart im Prinzip unverändert. Die Sensoren stehen außen am Rohr ebenso wenig vor wie innen. Von außen sind die Sensoren in der Regel überhaupt nicht sichtbar.

Die Anordnung der Sensoren 1 a wird gut aus der Schnittdarstellung gemäß Figur 2 erkennbar. Die Sensoren 1 a liegen beispielsweise in der inneren Schicht 3, so dass auch die Schutzschicht 2 erhalten bleibt und deren Funktion nicht beeinträchtigt wird. Durch die Sensoren wird ein durch das Rohr strömendes Fluid nicht beeinflusst. Das freie Lumen im Inneren des Rohrs bleibt erhalten.

Bei den Sensoren handelt es sich beispielsweise um klein dimensionierte flache plättchenartige metallische Mikrochips mit Halbleitern, die geeignet sind, eine für die Funktion oder die Eigenschaften des Rohrs relevante physikalische Größe zu erfassen und/oder Daten zu speichern. Es können zum Beispiel Mikrochips verwendet werden, wie sie aus verschiedenen Bereichen, wie Chipkarten, Kameras oder dergleichen bekannt sind.

Die erfindungsgemäßen Sensoren werden demnach, wie man insbesondere aus Figur 2 erkennt in die Rohrwandung eingebettet, was bei der Herstellung des Rohrs in einem kunststofftechnischen Formgebungsverfahren geschieht. Dadurch ist es nicht notwendig, Nuten, Bohrungen oder andere Hohlräume im Rohrkörper vorzusehen oder nachträglich einzubringen. Auch ist es nicht erforderlich, die Sensoren außen oder innen an der Rohrwandung zu befestigen, so dass die damit verbundenen zuvor genannten Nachteile entfallen. Die Einbringung der Sensoren kann bei der Extrusion des Rohrs erfolgen, beispielsweise, indem der Masse aus dem noch plastischen heißen Kunststoff in entsprechenden zeitlichen Abständen die Sensoren 1 a zugeführt werden, wodurch die Sensoren in die Masse des erkaltenden Kunststoffs eingebettet werden und somit in definierter Position unverlierbar und geschützt in die Rohrwandung eingeschlossen werden.

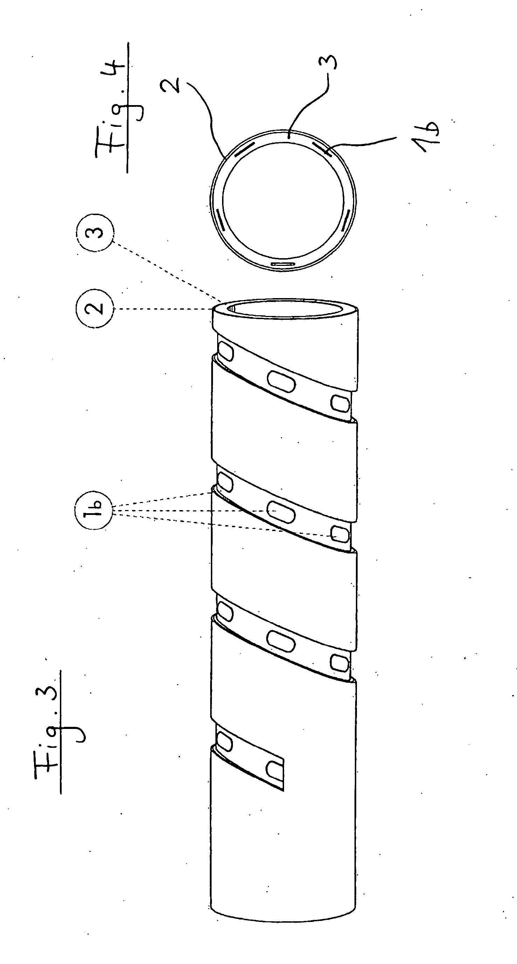

Die Figuren 3 und 4 zeigen eine weitere alternative Variante der erfindungsgemäßen Lösung, die sich von der zuvor beschriebenen Variante dadurch unterscheidet, dass die Sensoren 1 b nicht linear und achsparallel in Längsrichtung des Rohrs angeordnet sind, sondern auf einer spiralförmigen Linie, die sich um die Rohrachse windet. Ansonsten ist der Rohraufbau mit innerer Schicht 3 und äußerer Schutzschicht 2 wie in dem zuvor beschriebenen Ausführungsbeispiel. Das Rohr wurde auch hier lediglich zu Zwecken der Demonstration aufgeschnitten dargestellt, damit man die Lage der Sensoren 1 b erkennen kann. Tatsächlich ist die Rohrwandung nach außen hin geschlossen und glatt.

Figur 4 zeigt schematisch vereinfacht die Lage der Sensoren 1 b, wenn man in Längsrichtung der Rohrachse schaut. Da die Sensoren auf einer spiralförmigen Linie um die Rohrachse angeordnet sind, befinden sich über die Länge des Rohrs gesehen in den verschiedenen Umfangspositionen jeweils Sensoren, was den Vorteil einer besseren Detektion hat, da die Sensoren so alle Umfangsbereiche des Rohrs erfassen.

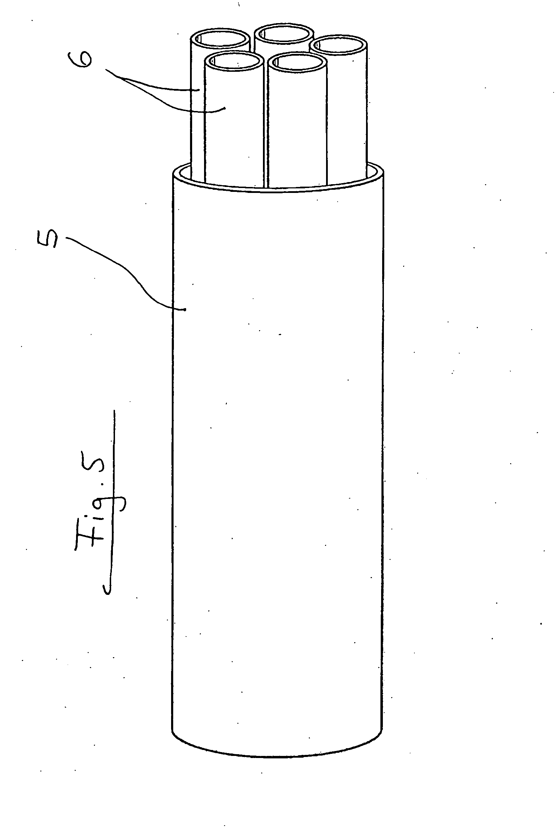

Nachfolgend wird unter Bezugnahme auf Figur 5 ein weiteres Ausführungsbeispiel der vorliegenden Erfindung näher erläutert. Die Darstellung zeigt ein Rohr wie es typischerweise für Kabelschutzrohre beispielsweise für Glasfaserkabel Verwendung findet. Hier ist ein zylindrisches Mantelrohr 5 vorgesehen, welches eine Anzahl ebenfalls beispielsweise zylindrischer Innenröhrchen 6 aufnimmt. Diese Innenröhrchen 6 dienen wiederum dazu, jeweils einzelne Kabel, z.B. Glasfaserkabel aufzunehmen, die in der Zeichnung nicht dargestellt sind. Es kann eine unterschiedliche Anzahl von Innenröhrchen von einem Mantelrohr aufgenommen werde, beispielsweise bis zu sieben, je nach Dimension der Innenröhrchen 6 und des Mantelrohrs 5. Es können aber auch noch wesentlich mehr solcher Innenröhrchen vorhanden sein. Das gleiche Mantelrohr kann dann auch mit weniger Innenröhrchen belegt werden, je nach Bedarf des Anwenders. Die Innenröhrchen 6 können bei der Ausführungsvariante gemäß Figur 5 in dem Mantelrohr 5 gegeneinander verschiebbar sein und unterschiedlich weit aus dem Mantelrohr 5 herausragen. In dem Ausführungsbeispiel sind nur fünf Innenröhrchen 6 erkennbar, da die anderen Innenröhrchen kürzer sind und nicht aus dem Mantelrohr 5 herausragen.

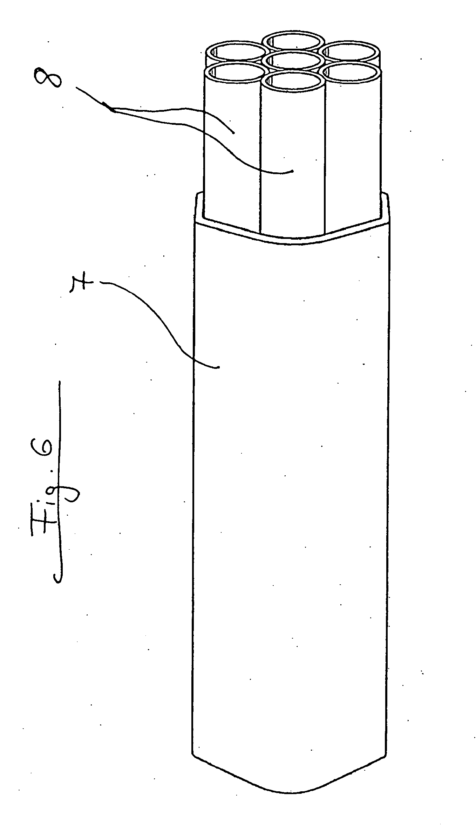

Figur 6 zeigt eine etwas andere Ausführungsvariante eines Kabelschutzrohrs mit Mantelrohr. Hier ist das Mantelrohr 7 nicht zylindrisch, sondern im Umriss hexagonal ausgebildet. Diese Mantelrohr 7 nimmt wie man hier erkennen kann insgesamt sieben Innenröhrchen 8 in seinem Innenraum auf. Diese Innenröhrchen nehmen wiederum Kabel auf, die hier nicht dargestellt sind. Ebenfalls nicht dargestellt sind die erfindungsgemäßen Sensoren, die in der Rohrwandung des Mantelrohrs angeordnet sein können, beispielsweise mit einer Zuordnung jeweils zu den einzelnen Innenröhrchen und somit zu den einzelnen Kabeln, die diese aufnehmen. Man kann alternativ dazu auch Sensoren in den jeweiligen Rohrwandungen der Innenröhrchen 8 unterbringen, sofern es deren Wandstärke und die Dimensionierung der Sensoren zulässt. Wegen des engen Krümmungsradius der Innenröhrchen ist es unter Umständen dann sinnvoll schmalere lang gestreckte Sensoren einzusetzen, damit diese in die Wandung des Innenröhrchens hineinpassen.

Die Ausführungsvariante gemäß Figur 6 unterscheidet sich von der zuvor beschriebenen dadurch, dass der Innenraum der Mantelrohrs 7 mit insgesamt sieben Innenröhrchen 8 in dem Beispiel dicht gepackt ist und dass in diesem Fall die Innenröhrchen nicht mehr gegeneinander verschiebbar, sondern in Ihrer Lage fixiert sind.

## Patentansprüche

1. Kabelschutzrohr für Kabel oder Leitungen, welches mindestens einen Sensor und Informationsträger aufweist, der eine für eine Eigenschaft oder Funktion eines Kabels relevante Messgröße erfasst, wobei der mindestens eine Sensor und Informationsträger durch ein kunststofftechnisches Formgebungsverfahren bei der Herstellung des Rohrs in die Rohrwandung des Rohrs integriert ist und wobei der Sensor und Informationsträger wenigstens einen Chip umfasst oder in Form wenigstens eines Chips vorliegt,
wobei der Sensor (1 a, 1 b) und Informationsträger mindestens eine physikalische Größe betreffend ein in diesem Kabelschutzrohr verlegtes Kabel oder eine in diesem verlegte Leitung, die nicht die Temperatur ist, erfasst und speichert.

2. Kabelschutzrohr nach Anspruch 1, **dadurch gekennzeichnet, dass** der Sensor (1 a, 1 b) eine Wellenlänge von Licht oder anderer elektromagnetischer Wellen, die durch das Kabel oder die Leitung geleitet werden, erfasst.

3. Kabelschutzrohr nach Anspruch 1 oder 2, **dadurch gekennzeichnet, dass** dieses ein Kabelschutzrohr für Kabel oder Leitungen mit Glasfasern, Kunststofffasern, mineralischen Polymerfasern oder Metallen als leitenden oder übertragenden Medien ist.

4. Kabelschutzrohr nach einem der Ansprüche 1 bis 3, **dadurch gekennzeichnet, dass** der mindestens eine Sensor (1 a, 1 b) bei der Herstellung des Rohrs in den noch plastischen Kunststoff der Rohrwandung (3) vor dessen Erkalten eingearbeitet ist.

5. Kabelschutzrohr nach einem der Ansprüche 1 bis 4, **dadurch gekennzeichnet, dass** das Rohr durch Extrudieren hergestellt ist und der mindestens eine Sensor (1 a, 1 b) dabei in die Rohrwandung (3) einextrudiert ist.

6. Kabelschutzrohr nach einem der Ansprüche 1 bis 5, **dadurch gekennzeichnet, dass** der mindestens eine Sensor (1 a, 1 b) so in die Rohrwandung (3) eingebracht ist, dass er die Rohrwandung außenseitig radial nicht überragt und/oder innenseitig radial nicht in den lichten Querschnitt des Rohrs hineinragt.

7. Kabelschutzrohr nach einem der Ansprüche 1 bis 6, **dadurch gekennzeichnet, dass** das Rohr als Endlosrohr in kontinuierlicher Fertigung hergestellt ist.

8. Kabelschutzrohr nach einem der Ansprüche 1 bis 7, **dadurch gekennzeichnet, dass** dieses eine Mehrzahl von Sensoren/Informationsträgern (1 a) aufweist, die jeweils mit Abstand zueinander entlang einer metrisch fixierten Kette parallel zur Längsachse des Rohrs in der Rohrwandung (3) angeordnet sind.

9. Kabelschutzrohr nach einem der Ansprüche 1 bis 7, **dadurch gekennzeichnet, dass** dieses eine Mehrzahl von Sensoren/Informationsträgern (1 b) aufweist, die jeweils mit Abstand zueinander in einer metrisch fixierten Kette auf einer spiralförmigen Linie um die Längsachse des Rohrs in der Rohrwandung (3) angeordnet sind.

10. Kabelschutzrohr nach einem der Ansprüche 1 bis 9, **dadurch gekennzeichnet, dass** dieses im wesentlichen aus einem Polyolefin, Polyaromaten, Polyalkan, einem Polyethylen, Polypropylen, Polycarbonat mit und ohne Heteroatom, oder einem Polyvinylchlorid besteht und der Sensor (1 a, 1 b) bzw. die Sensoren in diesen Kunststoff eingebettet sind.

11. Kabelschutzrohr nach einem der Ansprüche 1 bis 10, **dadurch gekennzeichnet, dass** mindestens einer der Sensoren (1 a, 1 b) ein Halbleitersensor ist.

12. Kabelschutzrohr nach einem der Ansprüche 1 bis 11, **dadurch gekennzeichnet, dass** mindestens ein Sensor/Informationsträger (1 a, 1 b) einen Mikrochip umfasst oder in Form eines Mikrochips vorliegt, der Daten, die für eine Eigenschaft des Rohrs, für die ordnungsgemäße Funktion des Rohrs oder des in dem Rohr verlegten Kabels oder der Leitung relevante Messgrößen betreffen, oder auch Daten zur Verlegung, Montage, Charakterisierung und Identifikation der im Rohr verlegten Kabel oder Leitungen oder für deren Wartung relevante Daten, speichert.

13. Kabelschutzrohr nach einem der Ansprüche 1 bis 12, **dadurch gekennzeichnet, dass** mindestens ein Sensor (1 a, 1 b) vorgesehen ist, der die Stärke eines in dem Kabel oder der Leitung geleiteten Signals oder die Amplitude einer in dem Kabel oder der Leitung geleiteten elektromagnetischen Welle erfasst.

14. Kabelschutzrohr nach einem der Ansprüche 1 bis 12, **dadurch gekennzeichnet, dass** mindestens ein Sensor (1 a, 1 b) vorgesehen ist, der die Funktion oder eine Eigenschaft mindestens eines im Übergangsbereich zwischen zwei miteinander verbundenen Kabel- oder Leitungsabschnitten angeordneten Verstärkers prüft oder überwacht.

15. Kabelschutzrohr nach einem der Ansprüche 1 bis 14, **dadurch gekennzeichnet, dass** mindestens ein Sensor (1 a, 1 b) mit Mitteln ausgerüstet oder kombiniert ist, die eine exakte unterscheidende Ortung dieses Sensors, insbesondere mittels eines Satellitenüberwachungssystems ermöglichen.

16. Kabelschutzrohr nach einem der Ansprüche 1 bis 15, **dadurch gekennzeichnet, dass** mindestens ein Sensor/Informationsträger (1 a, 1 b) einen klein dimensionierten Chip umfasst, insbesondere ausgewählt aus CSP (Chip Scale Packages), BGA (Ball Grid Arrays), Flip Chips, Memory Chips oder dergleichen.

17. Kabelschutzrohr nach einem der Ansprüche 1 bis 16, **dadurch gekennzeichnet, dass** mittels mindestens eines Signals in mindestens einem in der Rohrwandung (3) des insbesondere im Erdreich verlegten Rohrs angeordneten Sensor/Informationsträger (1 a, 1 b) gespeicherte Informationen mittels einer Überwachungseinrichtung aus der Entfernung abgefragt werden.

18. Kabelschutzrohr nach Anspruch 17, **dadurch gekennzeichnet, dass** in dem Sensor/Informationsträger (1 a, 1 b) gespeicherte Informationen mittels elektromagnetischer Wellen, magnetischer Induktion oder Ultraschall abgefragt werden.

19. Kabelschutzrohr nach einem der vorhergehenden Ansprüche, **dadurch gekennzeichnet, dass** dieses ein Mantelrohr (5, 7) umfasst, welches eine Mehrzahl von jeweils einzelnen Kabeln oder Kabelgruppen zugeordneten Innenröhrchen (6, 8) aufnimmt.

20. Kabelschutzrohr nach Anspruch 19, **dadurch gekennzeichnet, dass** das Mantelrohr (7) einen polygonalen Umriss aufweist und mehrere Innenröhrchen (8) in axialer Richtung unverschiebbar (lagefixiert) in sich aufnimmt.

21. Kabelschutzrohr nach Anspruch 19, **dadurch gekennzeichnet, dass** das Mantelrohr (5) einen runden Umriss aufweist und mehrere Innenröhrchen (6), vorzugsweise eine variable Anzahl von Innenröhrchen, aufnimmt, die in dem Mantelrohr in axialer Richtung verschiebbar sind.

22. Einrichtung zur Überwachung oder Prüfung der ordnungsgemäßen Funktion oder mindestens einer Eigenschaft eines Kabelschutzrohrs gemäß einem der Ansprüche 1 bis 21 oder eines in dem Rohr verlegten Kabels oder einer Leitung, **dadurch gekennzeichnet, dass** diese eine Antenne umfasst, die einen Weg entlang des Rohrs abfährt, um in mindestens einem Sensor und Informationsträger (1 a, 1 b) gespeicherte Informationen abzufragen.

23. Verfahren zur Überwachung oder Prüfung der ordnungsgemäßen Funktion oder mindestens einer Eigenschaft eines Kabelschutzrohrs gemäß einem der Ansprüche 1 bis 21 oder eines in dem Kabelschutzrohr verlegten Kabels oder einer Leitung, **dadurch gekennzeichnet, dass** in einer Mehrzahl in der Rohrwandung (3) angeordneter Sensoren und Informationsträgern (1 a, 1 b) gespeicherte Informationen abgefragt werden und durch Vergleich der von den einzelnen Sensoren und Informationsträgern gelieferten Informationen eine Stelle des Rohrs oder des Kabels oder der Leitung, an der eine Fehlfunktion vorliegt, geortet wird.

## Claims

1. A cable protective tube for cables or cables lines, comprising at least one sensor and information carrier which detects a measuring variable relevant to a property or function of a cable, wherein the at least one sensor and information carrier is integrated into the tube wall by a plastic-technical forming process during the production of the tube and wherein the sensor and information carrier comprises at least one chip or exists in the form of at least one microchip, wherein the sensor (1 a, 1 b) and information carrier detects and stores at least one physical variable concerning a cable or a cable-line laid in said cable protective tube, which is not the temperature.

2. The cable protective tube according to Claim 1,
**characterized in that**
the sensor (1 a, 1 b) detects a wavelength of light or of other electromagnetic waves that are carried by the cable or cable-line.

3. The cable protective tube according to Claim 1 or 2,
**characterized in that**
said tube is a cable protective tube for cables or cable-lines having optical fibres, plastic fibres, mineral polymer fibres or metals as conducting or transmitting media.

4. The cable protective tube according to one of Claims 1 to 3,
**characterized in that**
the at least one sensor (1 a, 1 b) is incorporated into the still plastic synthetic material of the tube wall (3) during the production of the tube before said material cools.

5. The cable protective tube according to one of Claims 1 to 4,
**characterized in that**
the tube is produced by extrusion and the at least one sensor (1 a, 1 b) is extruded into the tube wall (3) at the same time.

6. The cable protective tube according to one of Claims 1 to 5,
**characterized in that**
the at least one sensor (1 a, 1 b) is mounted in the tube wall (3) such that externally it does not project radially beyond the tube wall, and/or internally it does not radially project into the inner cross-section of the tube.

7. The cable protective tube according to one of Claims 1 to 6,
**characterized in that**
the tube is produced as an endless tube in continuous production.

8. The cable protective tube according to one of Claims 1 to 7,
**characterized in that**
said tube comprises a plurality of sensors/information carriers (1 a), which are each arranged spaced a distance apart from one another in the tube wall (3), along a metrically fixed chain parallel to the longitudinal axis of the tube.

9. The cable protective tube according to one of Claims 1 to 7,
**characterized in that**
said tube comprises a plurality of sensors/information carriers (1 b), which are each arranged spaced a distance apart from one another in the tube wall (3), in a metrically fixed chain on a spiral line about the longitudinal axis of the tube.

10. The cable protective tube according to one of Claims 1 to 9,
**characterized in that**
said tube substantially consists of a polyolefin, polyaromate, polyalkane, a polyethylene, polypropylene, polycarbonate with and without heteroatom, or a polyvinylchloride and the sensor (1 a, 1 b) or sensors are embedded in this plastic.

11. The cable protective tube according to one of Claims 1 to 10,
**characterized in that**
at least one of the sensors (1 a, 1 b) is a semiconductor sensor.

12. The cable protective tube according to one of Claims 1 to 11,
**characterized in that**
at least one sensor/information carrier (1 a, 1 b) comprises a microchip or exists in the form of a microchip, which stores data concerning measuring variables relevant to a property of the tube, to the correct functioning of the tube or of the cable or cable-line laid in the tube, or also data concerning the laying, assembly, characterisation and identification of the cables or cable-lines laid in the tube, or data relevant to the maintenance thereof.

13. The cable protective tube according to one of Claims 1 to 12,
**characterized in that**
at least one sensor (1 a, 1 b) is provided which detects the strength of a signal carried in the cable or the cable-line, or the amplitude of an electromagnetic wave carried in the cable or the cable-line.

14. The cable protective tube according to one of Claims 1 to 12,
**characterized in that**
at least one sensor (1 a, 1 b) is provided which tests or monitors the functioning or a characteristic of at least one amplifier arranged in the transition region between two cables or cable-line sections that are connected together.

15. The cable protective tube according to one of Claims 1 to 14,
**characterized in that**
at least one sensor (1 a, 1 b) is equipped or combined with means which enable an exact distinguishing location of said sensor, in particular by means of a satellite monitoring system.

16. The cable protective tube according to one of Claims 1 to 15,
**characterized in that**
at least one sensor/information carrier (1 a, 1 b) comprises a small-dimensioned microchip, selected in particular from CSP (Chip Scale Packages), BGA (Ball Grid Arrays), Flip chips, memory chips or the like.

17. The cable protective tube according to one of Claims 1 to 16,
**characterized in that**
by means of at least one signal, information items stored in at least one sensor/information carrier (1 a, 1 b) arranged in the tube wall (3) of the tube, in particular laid underground, are queried remotely by means of a monitoring device.

18. The cable protective tube according to Claim 17,
**characterized in that**
information items stored in the sensor/information carrier (1 a, 1 b) are queried by means of electromagnetic waves, magnetic induction or ultrasound.

19. Method according to any one of the preceding claims,
**characterized in that**
said tube comprises a jacket tube (5, 7), which holds a plurality of small inner tubes (6, 8), each assigned to individual cables or cable groups.

20. The cable protective tube according to Claim 19,
**characterized in that**
the jacket tube (7) has a polygonal outline and accommodates a plurality of small inner tubes (8) within it, which are non-displaceable in an axial direction (positionally fixed).

21. The cable protective tube according to Claim 19,
**characterized in that**
the jacket tube (5) has a round outline and accommodates a plurality of small inner tubes (6), preferably a variable number of small inner tubes, which are displaceable in the jacket tube in an axial direction.

22. Device for monitoring or testing the correct functioning or at least one property of a cable protective tube according to any one of Claims 1 to 21, or of a cable or a cable-line laid in the tube,
**characterized in that**
said device comprises an antenna which traverses a path along the tube in order to query information items stored in at least one sensor and information carrier (1 a, 1 b).

23. Device for monitoring or testing the correct functioning or at least one property of a cable protective tube according to any one of Claims 1 to 21, or of a cable or a cable-line laid in the tube,
**characterized in that**
information items stored in a plurality of sensors and information carriers (1 a, 1 b) arranged in the tube wall (3) are queried, and by comparison of the information supplied by the individual sensors and information carriers, a position of the tube or the cable or cable-line at which a malfunction is present is located.

## Revendications

1. Tuyau de protection de câble pour câbles ou lignes, qui présente au moins un capteur et support d'information, lequel enregistre une grandeur de mesure importante pour une propriété ou fonction d'un câble, le au moins un capteur et support d'information étant intégré par un procédé de formage de technologie des matières synthétiques lors de la fabrication du tuyau dans la paroi du tuyau et le capteur et support d'information comprenant au moins une puce ou étant présent sous la forme d'au moins une puce,
le capteur (1a, 1b) et support d'information enregistrant et mémorisant au moins une grandeur physique concernant un câble posé dans ce tuyau de protection de câble ou une ligne posée dans ce câble, qui n'est pas la température.

2. Tuyau de protection de câble selon la revendication 1, **caractérisé en ce que** le capteur (1 a, 1 b) enregistre une longueur d'onde de lumière ou d'autres ondes électromagnétiques qui sont acheminées par le câble ou la conduite.

3. Tuyau de protection de câble selon la revendication 1 ou 2, **caractérisé en ce que** celui-ci est un câble de protection de câble pour des câbles ou lignes avec des fibres de verre, des fibres de matière synthétique, des fibres polymères minérales ou des métaux sous forme de fluides conducteurs ou transmetteurs.

4. Tuyau de protection de câble selon l'une des revendications 1 à 3, **caractérisé en ce que** le au moins un capteur (1 a, 1 b) est intégré lors de la fabrication du tuyau dans la matière synthétique encore plastique de la paroi de tuyau (3) avant son refroidissement.

5. Tuyau de protection de câble selon l'une des revendications 1 à 4, **caractérisé en ce que** le tuyau est fabriqué par extrusion et le au moins un capteur (1 a, 1 b) est intégré alors par extrusion dans la paroi de tuyau (3).

6. Tuyau de protection de câble selon l'une des revendications 1 à 5, **caractérisé en ce que** le au moins un capteur (1 a, 1 b) est introduit dans la paroi de tuyau (3) de telle sorte qu'il ne dépasse radialement côté extérieur de la paroi de tuyau et/ou ne dépasse pas côté intérieur radialement dans la section intérieure du tuyau.

7. Tuyau de protection de câble selon l'une des revendications 1 à 6, **caractérisé en ce que** le tuyau est fabriqué comme tuyau continu dans une fabrication continue.

8. Tuyau de protection de câble selon l'une des revendications 1 à 7, **caractérisé en ce que** celui-ci présente une pluralité de capteurs/supports d'information (1 a), qui sont disposés respectivement à distance les uns des autres le long d'une chaîne fixée au plan métrique parallèlement à l'axe longitudinal du tuyau dans la paroi de tuyau (3).

9. Tuyau de protection de câble selon l'une des revendications 1 à 7, **caractérisé en ce que** celui-ci présente une pluralité de capteurs/supports d'information (1 b), qui sont disposés respectivement à distance les uns des autres dans une chaîne fixée au plan métrique sur une ligne en forme de spirale autour de l'axe longitudinal du tuyau dans la paroi de tuyau (3).

10. Tuyau de protection de câble selon l'une des revendications 1 à 9, **caractérisé en ce que** celui-ci est principalement à base d'une polyoléfine, de poly aromates, de polyalcane, d'un polyéthylène, polypropylène, polycarbonate avec et sans hétéroatome, ou d'un chlorure de polyvinyle et le capteur (1 a, 1 b) ou les capteurs sont intégrés dans cette matière synthétique.

11. Tuyau de protection de câble selon l'une des revendications 1 à 10, **caractérisé en ce qu'**au moins l'un des capteurs (1 a, 1 b) est un capteur à semiconducteurs.

12. Tuyau de protection de câble selon l'une revendications 1 à 11, **caractérisé en ce qu'**au moins un capteur support d'information (1 a, 1 b) comprend une micropuce ou est présent sous la forme d'une micropuce, laquelle mémorise des données, qui concernent des grandeurs de mesure importantes pour une propriété du tuyau, pour le fonctionnement correct du tuyau ou du câble posé dans le tuyau ou de la ligne, ou également des données pour la pose, le montage, la caractérisation et l'identification des câbles ou conduites posés dans le tuyau ou des données importantes pour leur maintenance.

13. Tuyau de protection de câble selon l'une des revendications 1 à 12, **caractérisé en ce qu'**il est prévu au moins un capteur (1 a, 1 b) qui enregistre l'intensité d'un signal acheminé dans le câble ou la ligne ou l'amplitude d'une onde électromagnétique acheminée dans le câble ou la ligne.

14. Tuyau de protection de câble selon l'une des revendications 1 à 12, **caractérisé en ce qu'**il est prévu au moins un capteur (1 a, 1 b) qui teste ou contrôle la fonction ou une propriété d'au moins un amplificateur disposé entre deux parties de câble ou de ligne reliées l'une à l'autre.

15. Tuyau de protection de câble selon l'une des revendications 1 à 14, **caractérisé en ce qu'**au moins un capteur (1 a, 1 b) est équipé ou combiné avec des moyens qui permettent une localisation exacte par différenciation de ce capteur, en particulier au moyen d'un système de contrôle par satellite.

16. Tuyau de protection de câble selon l'une des revendications 1 à 15, **caractérisé en ce qu'**au moins un capteur/support d'information (1 a, 1 b) comprend une puce dimensionnée petite, en particulier sélectionnée à base de CSP (Chip Scale Pakages), BGA (Ball Grid Arrays), Flip Chips, Memory Chips ou similaires.

17. Tuyau de protection de câble selon l'une des revendications 1 à 16, **caractérisé en ce que** des informations stockées au moyen d'au moins un signal dans au moins un capteur/support d'information disposé dans la paroi (3) du tuyau posé en particulier dans la terre sont interrogées à distance au moyen d'un dispositif de contrôle.

18. Tuyau de protection de câble selon la revendication 17, **caractérisé en ce que** des informations stockées dans le capteur/support d'information (1 a, 1 b) sont interrogées au moyen d'ondes électromagnétiques, d'induction magnétique ou par ultrason.

19. Tuyau de protection de câble selon l'une des revendications précédentes, **caractérisé en ce que** celui-ci comprend un tuyau enveloppe (5, 7) qui reçoit une pluralité de petits tuyaux intérieurs (6, 8) respectivement associés à des câbles ou groupes de câbles individuels.

20. Tuyau de protection de câble selon la revendication 19, **caractérisé en ce que** le tuyau enveloppe (7) présente un contour polygonal et reçoit plusieurs petits tubes intérieurs (8) de façon non coulissante dans le sens axial (fixé en position).

21. Tuyau de protection de câble selon la revendication 19, **caractérisé en ce que** le tuyau enveloppe présente un contour rond et reçoit plusieurs petits tubes intérieurs (6), de préférence un nombre variable de petits tubes intérieurs, lesquels peuvent être déplacés dans le tuyau enveloppe dans le sens radial.

22. Dispositif pour contrôler ou tester le fonctionnement correct ou au moins une propriété d'un tuyau de protection de câble selon l'une des revendications 1 à 21 ou d'un câble posé dans le tuyau ou d'une ligne, **caractérisé en ce que** celui-ci comprend une antenne qui parcourt une course le long du tuyau, afin d'interroger des informations stockées dans au moins un capteur et support d'information (1 a, 1 b).

23. Dispositif pour contrôler ou tester le fonctionnement correct ou au moins une propriété d'un tuyau de protection de câble selon l'une des revendications 1 à 21, **caractérisé en ce que** des informations stockées dans une pluralité de capteurs et supports d'information (1 a, 1 b) disposés dans la paroi de tuyau (3) et un endroit du tuyau ou du câble ou de la ligne, sur laquelle on a un disfonctionnement, est localisé par comparaison des informations fournies par les capteurs et supports d'information individuels.
